Europäisches Patentamt

European Patent Office

Office européen des brevets

(11) Publication number: **0 345 063**
**A2**

# EUROPEAN PATENT APPLICATION

(21) Application number: 89305529.3

(22) Date of filing: 01.06.89

(51) Int. Cl.⁴: **G 06 F 9/44**
**G 06 F 15/20**

(30) Priority: 03.06.88 US 202274

(43) Date of publication of application:
06.12.89 Bulletin 89/49

(84) Designated Contracting States: **DE FR GB**

(71) Applicant: **TEKTRONIX, INC.**
**Howard Vollum Park 14150 S.W. Karl Braun Drive P.O.**
**Box 500**
**Beaverton Oregon 97077 (US)**

(72) Inventor: **Soiffer, Neil M.**
**9215, N. W. Lovejoy Street**
**Portland Oregon 97229 (US)**

**Abdali, S. Kamal**
**2800 N. W. Eastway Court**
**Beaverton Oregon 97006 (US)**

**Cherry, Guy W.**
**14985 Perimeter**
**Beaverton Oregon 97006 (US)**

(74) Representative: **Burke, Steven David et al**
**R.G.C. Jenkins & Co. 26 Caxton Street**
**London SW1H 0RJ (GB)**

(54) Method and apparatus for identifying common subexpressions within an expression.

(57) A method and apparatus for identifying common subexpressions within a mathematical expression are disclosed. The expression is represented as a DAG (directed acyclic graph) or expression tree, and common subexpressions (syntactically identical subexpressions) are uniquely addressed as operator nodes in the tree. The method includes the steps of selecting a displayed subexpression, comparing the selected subexpression with predetermined subexpressions using the uniquely addressed operator nodes to determine if there is a match. If there is a match, a label (new name) is assigned to the selected subexpression, and all appearances of the selected subexpression are replaced (displayed) with the label.

The apparatus comprises a keyboard with a mouse, a microprocessor, a read-only-memory with a stored program, a random access memory, and a cathode ray tube display. In response to applied data from the keyboard and/or mouse, the processor, under control of the stored program, labels (renames) subexpressions stored in the random access memory and displays the labeled subexpressions.

FIG.1

**Description**

## METHOD AND APPARATUS FOR IDENTIFYING COMMON SUBEXPRESSIONS WITHIN AN EXPRESSION

### BACKGROUND OF THE INVENTION

This invention relates to the display of mathematical expressions generally and, more particularly, to the representation (renaming and identification) of common subexpressions within an expression.

Sometimes when computer systems are used to process and display mathematical expressions, an individual expression may become too lengthy, when displayed, for the user to easily identify common subexpressions within the expression. To meet this problem, various expression-collapsing and expression-renaming techniques have been developed for representing mathematical expressions. One such technique featuring an expression renaming, and summarization (unrevealing/collapsing) approach is described, for example, in Report No. UCB/CSD 84/193 by Gregg Foster entitled DREAMS: Display REpresentation for Algebraic Manipulation Systems, published April 1984 by Computer Science Division (EECS), University of California, Berkeley, California. Another technique, featuring the use of a display tree or directed acyclic graph (DAG) where similar expressions share common nodes, is described for example in the article by C. J. Smith and N. M. Soiffer entitled Mathscribe: A User Interface for Computer Algebra Systems, published July 1986 at pages 7-12 of the Proceedings of the ACM-SIGPLAN Symposium on Symbolic and Algebraic Manipulation.

Although the above-mentioned prior references describe expression-collapsing and expression-renaming techniques, and the Smith-Soiffer article further describes a DAG where similar (identical) expressions share common nodes and are stored uniquely, a method which provides for faster processing (collapsing, renaming, and displaying) of expressions is still needed.

### SUMMARY OF THE INVENTION

In accordance with the illustrated preferred embodiment of the present invention, a method and apparatus is provided which uses the DAG approach (i.e., identical subexpressions sharing common nodes of an expression tree), but takes the approach further in order to achieve faster processing of expressions by predefining (representing) selected subexpressions as groups of data in the tree, with each group having an operator (e.g., an operator symbol such as a $+$, $-$, x, $\div$ ) as branching node of the tree (i.e., as the main node of the group). The node is then assigned a unique address.

To achieve faster processing, therefore, it is not enough to have identical subexpressions share common nodes, if stored at each such node is a string (e.g., a subexpression in string form such as "c $+$ d") which must be fully searched. For faster processing of the subexpression, the node may comprise (represent) merely an operator of the subexpression, with the operator assigned a unique address for quick comparison during searching.

The apparatus comprises a keyboard with a mouse, a microprocessor, a read-only-memory with a stored program, a random access memory, and a cathode ray tube display. In response to applied data from the keyboard and/or mouse, the processor, under control of the stored program, labels (renames) subexpressions stored in the random access memory and displays the labeled subexpressions.

### BRIEF DESCRIPTION OF THE DRAWINGS

Figure 1 is a block diagram of the system of the present invention;

Figure 2 is a graphic representation of expressions displayable by the system of Figure 1;

Figure 3 is a graphic representation of a menu displayable by the system of Figure 1;

Figure 4 is a graphic representation of the renaming (labeling) of expressions of Figure 2 by the system of Figure 1;

Figures 5A - 5C are block diagrams of an expression tree utilized by the system of Figure 1;

Figure 6 is a block diagram of a data storage and addressing scheme corresponding to a node in the expression tree of Figures 5A - 5C utilized by the system of Figure 1.

### DETAILED DESCRIPTION OF THE PREFERRED EMBODIMENT

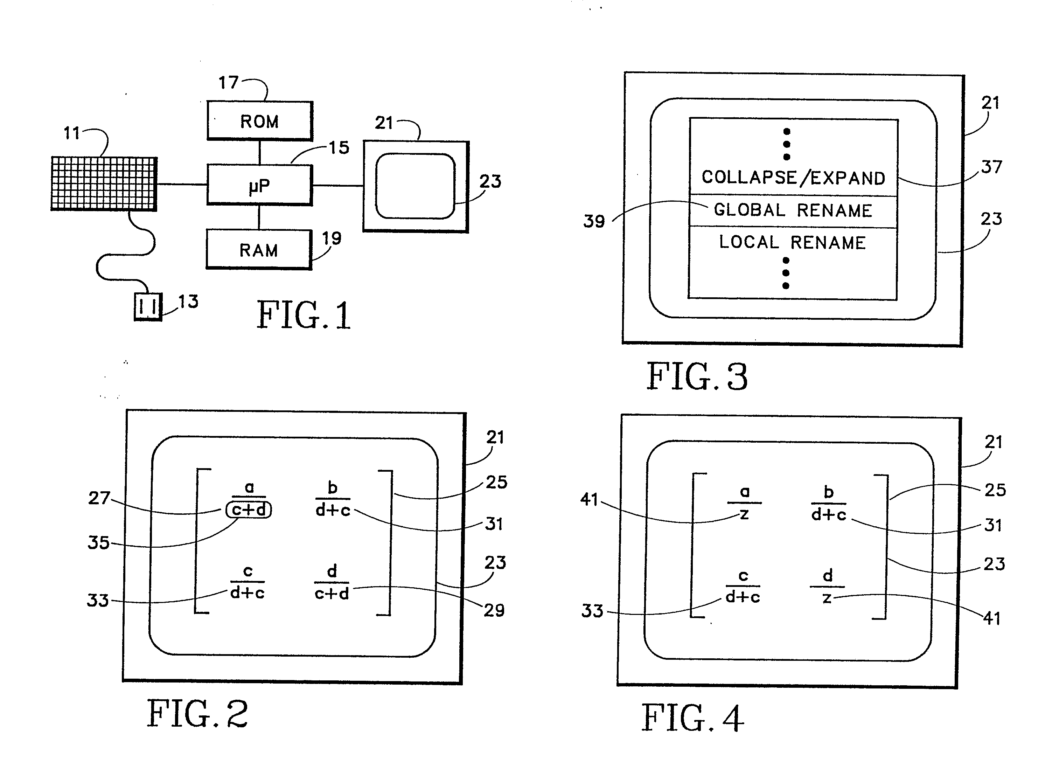

Referring new to Figure 1, there is shown a system (apparatus) of the present invention comprising a keyboard 11 with mouse 13, microprocessor 15, read-only-memory (ROM) 17 including a stored program (shown in Appendix A), random access memory (RAM) 19, and a cathode ray tube (CRT) display 21. Data entered into the system via the mouse 13 or via one or more keys of the keyboard 11 is stored in RAM 19 and processed by microprocessor 15 under control of the stored program in ROM 17. Selected portions of the processed daa are then displayed on screen 23 of CRT 21.

Figure 2 shows a typical mathematical expression (e.g., a matrix) 25 which may be stored in memory 19 and displayed on screen 23 of the system of the present invention. The expression 25 comprises subexpression 27, 29 which are syntactically identical, and subexpression 31, 33 which are syntactically identical. Subexpressions 27 and 29 are not syntactically identical to subexpressions 31 and 33.

To simplify the appearance of a subexpression, it may be given a new name (i.e., re-named or re-labeled) by a user of the system. The user first selects the subexpression of interest (e.g., subexpression 27) by positioning a cursor or pointer (not shown) proximate to the subexpression (i.e., relative to a virtual bounding box defining the subexpression). This may be accomplished by entering data into the system, i.e., applying data to processor 15 of the system typically by actuating a cursor-positioning key (not shown) of keyboard 11 or by appropriately moving and actuating mouse 13.

As shown in Figure 2, in response to selection of subexpression 27, a shaded region 35 is displayed bounding the selected subexpression. Thereafter, as shown in Figure 3, a menu of functions 37 is displayed, from which the user selects the rename function 39. Function selection may be accomplished using the keyboard and mouse in the same manner as described for expression selection.

Upon selection of the rename function, processor 15, operating under control of the stored program in ROM 17 and in response to the applied data from keyboard 11 and/or mouse 13, assigns a unique label (new name, symbol, or icon) to the selected subexpression 27. As shown in Figure 4, the label 41 is then displayed in place of all occurrences 27, 29 of the selected subexpression in the display. Provision is made for the user to enter a label of choice via keyboard 11. (In the event the user does not enter a label, processor 15 assigns a predetermined unique default label.

Prior to assigning labels to selected subexpressions, the system first stores the data elements (operators and operands) comprising the expression in selected groups, as an expression tree or directed acyclic graphs (DAG), according to the operators (i.e., operator symbols such as $+$, $-$, $\times$, $\div$) in the expression. Each data group may be said, therefore, to be predefined to correspond to an operator node in the DAG, the node having a predetermined common address identifying the group. For example, the data elements of expressions

$$\frac{a}{c+d} \quad \text{and} \quad \frac{d}{c+d}$$

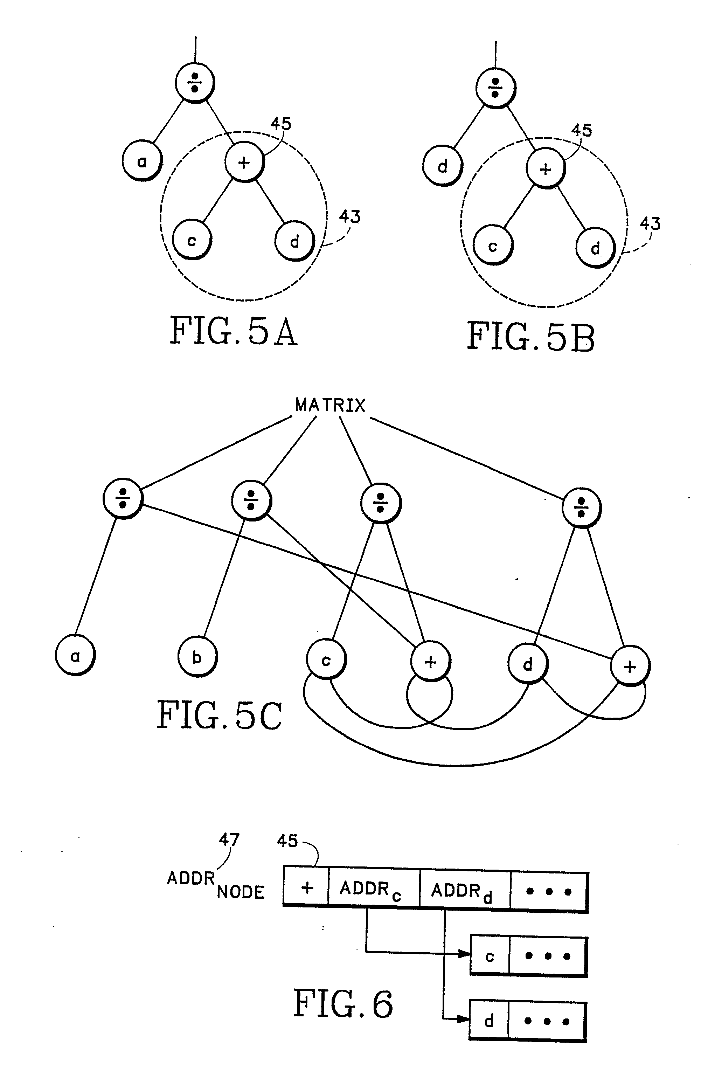

of Figure 2 may be represented (grouped) as shown in Figures 5A and 5B, respectively. Matrix 25 may be represented as sown in Figure 5C.

As can be seen from Figures 2 and 5A-5C, both the selected subexpression 27 and the syntactically identical subexpression 29 are represented as a group 43 of data elements $(c + d)$ corresponding to a node 45 in the DAG. Figure 6 shows the group 43 as a set of storage elements, with mode 45 of the group assigned a predetermined unique address $(Addr_{node})$ 47. This address is common to all identical predefined subexpressions, e.g., common to selected subexpression 27 and to syntactically identical subexpression 29. This approach provides for faster processing of expressions, by permitting comparison of expressions at the node level using unique addresses.

```
;; renaming stuff

(defsubst newRename ()
  ;; Returns:
  ;;     <symbol> -- the new name
  (setq renameCount (1+ renameCount))
  (algSysConcat SHRINK renameCount))


(defsubst renameToExpr (name)
  ;; Inputs:
  ;;     name <symbol>
  ;; Returns:
  ;;     <sexpr> -- alg sys form
  (gethash name RenameToExprTable))

(defun ExprToRename (expr)
  ;; Inputs:
  ;;     <sexpr> -- alg sys form
  ;; Returns:
  ;;     <symbol> -- short name of expr
  (prog (name ans)
        (setq name (gethash expr ExprToRenameTable))
        (if name
            then (return name))

        (setq name (implodes (string2FixnumList (GetControlPanelString))))
        (setq ans
              (cond ((gethash (algSysConcat name) RenameToExprTable)
                     (Notify NULL
                             (format nil "Use '~a' or automatic numbering for new name?~%~
Warning:  previous value of ~a will be removed." name name)
                             (list name "auto" "cancel")))
                    ((equal name "")
                     (Notify NULL
                             (format nil "Use automatic numbering for new name?~%~
To define your own name, select cancel,~
 type the new name in the control panel, and then select 'rename' again.")
                             '("auto" "cancel")))
                    (t
                     (Notify NULL
                             (format nil "Use '~a' or automatic numbering for new name?" n
                             (list name "auto" "cancel")))))
        (cond ((equal ans "auto")
               (setq name (newRename)))
              ((equal ans "cancel")
               (return nil))
              (t
               (setq name (algSysConcat name))))

        ; remove any old values and set new ones
        (remhash (gethash name RenameToExprTable) ExprToRenameTable)
        (setf (gethash expr ExprToRenameTable) name)
        (setf (gethash name RenameToExprTable) expr)
        (return name)))
```

```
(defun BuildExpandedDBoxes (dbox expandOperands?)
  ;; Returns:
  ;;    <DisplayBox> -- unpositioned expanded box
  (let* ((boxKey (Box-key (DisplayBox-box dbox)))
         (expandedForm (and expandOperands?
                            (renameToExpr (DisplayBoxAlgSysForm dbox)))))
    (cond ((and (dtpr boxKey) (dtpr (car boxKey))
               (memq (caar boxKey) '(ellipsis collapsed)))
           (make-DisplayBox
            ;*** position/depth are unknown -- nil is used for the clipRect
            box (parseExprRecursive 0 0 (first (keyInfo boxKey)) 0)))
          ((and expandOperands? expandedForm)
           (make-DisplayBox
            box (parseExprRecursive 0 0 expandedForm 0)))
          (t dbox)))))

(defun BuildRenamedDBox (dbox)
  (let* ((form (DisplayBoxAlgSysForm dbox))
         (charDBox (ExprToRename form)))          ; nil if no name
    (if charDBox
        then (BuildToken *NameOp* charDBox)
        else dbox)))

(comment defun BuildRenamedDBox (dbox)
  (let* ((form (DisplayBoxAlgSysForm dbox))
         (charDBox (ExprToRename form)) ; nil if no name
         (charBox))
    (if (or charDBox (not (token? (DisplayBox-box dbox))))
        then (progn
               (setq charDBox (dboxAt (BuildMultiChar charDBox) 0 0))
               (setq charBox (DisplayBox-box charDBox))
               (make-DisplayBox
                box (make-uniqueBox form nil
                                    operator *NameOp*
                                    width (Box-width charBox)
                                    up (Box-up charBox)
                                    down (Box-down charBox)
                                    children (list charDBox)
                                    key (computeKey *NameOp* (list charDBox)))))
        else dbox)))


(defun BuildGlobalRenamedDBox (path)
  ;; Returns:
  ;;    <Path>/nil -- a path from the renamed dbox to the root or
  ;;              nil if not renameable.
  (let* ((renamedDBox (first path))
         (oldBox (DisplayBox-box renamedDBox))
         (newBox (if (eq (Operator-type (Box-operator oldBox)) 'NonTerminal)
                     ; rename the box
                     then (DisplayBox-box (BuildRenamedDBox renamedDBox))
                     else (let ((expr (renameToExpr (DisplayBoxAlgSysForm renamedDBox))))
                            (and expr (parseExprRecursive 0 0 expr 0)))
                     )))
    (if (and newBox (neq newBox oldBox))
        then (DisplayBoxSubst path (make-DisplayBox box newBox))
        else nil)))
```

```
(defvar MarkTable
  ;; A hash table used to indicate whether a box has been visited or not.
  ;; It is created and thrown away by the traverse function.
  nil)

(defsubst marked? (box)
  (gethash box MarkTable))

(defsubst mark (box value)
  ;; Marks 'box' with 'value'.  If 'box' is already marked, then 'value'
  ;; becomes the new mark.
  ;; Inputs:
  ;;    box <Box> -- the box to be marked.
  ;;    value <t> -- the value stored at the marked box (can be anything).
  (setf (gethash box MarkTable) value)
  value)

(defsubst markValue (box)
  (gethash box MarkTable))

(defun DisplayBoxSubst (path newDBox)
  ;; Traverses rootDBox replacing all instances of 'oldBox' (not dbox)
  ;; with newBox.  Returns the *reversed* path from the distinguished dbox
  ;; to the root.
  ;; Inputs:
  ;;    path <Path> -- a path from the old dbox to the root
  ;;    newDBox <DisplayBox> -- the replacement dbox for '(first path)'
  ;; Returns:
  ;;    <Path> -- a path from the newDBox to the root of the new expression
  (let ((rpath (reverse path))
        (newPath)
        (newRoot))
    (setq MarkTable (make-hash-table :size 301 :test #'eq :rehash-size 301))
    (mark (DisplayBox-box (first path)) newDBox)
    ; Since '(first rpath)' is an invisible paren, we can save some time
    ; by doing the 'markAndSubst' on its inside directly.
    (mv-setq (newRoot newPath) (markAndSubst (rest rpath)))

    ; now add the invisible parens to the root
    (setq newRoot (addInvisibleParens newRoot RootIParenSpacing))
    (setf (DisplayBox-x newRoot) (DisplayBox-x (first rpath)))
    ; want to keep the top at the same position
    (setf (DisplayBox-y newRoot)
          (+ (DisplayBox-y (first rpath))
             (- (Box-up (DisplayBox-box newRoot))
                (Box-up (DisplayBox-box (first rpath))))))
    (DisplayBoxRemove (first rpath))
    (setq MarkTable nil)      ; let the table be gc'd
    (IndexPathToPath newRoot (cons 1 newPath))))

(defun markAndSubst (rpath)
  ;; Inputs:
  ;;    rpath <Path> -- a *reversed* path from the root to the descendent.
  ;; Returns:
  ;;    <Path> -- a *reversed* path from the current (unpositioned) dbox
  ;;               to the descendent.
  ; This routine doesn't look to see if a box is already marked because
  ; we must traverse to the end of rpath.  Hence, we may visit some
  ; boxes twice (they may have been visited by 'markAndSubstNoPath'), but
  ; no more than twice.
  (let ((box (DisplayBox-box (first rpath))))
    (if (null (rest rpath))
        ; should be the marked newDBox
```

```
      then (values (markValue box) nil)
      else (do ((ptr (Box-children box) (rest ptr))
                (oldDistDBox (second rpath))
                (distDBox)
                (distIPath)
                (dboxes nil))
               ((null ptr)
                (mv-bind (rebuildDBox newIPath)
                         (Rebuild (Box-operator box)
                                  (nreverse dboxes)
                                  distDBox)
                         (mark box rebuildDBox)
                         (values rebuildDBox
                                 (nconc newIPath distIPath))))
               (if (eq (first ptr) oldDistDBox)
                   then (mv-setq (distDBox distIPath)
                                 (markAndSubst (rest rpath)))
                        (push distDBox dboxes)
                   else (push (markAndSubstNoPath (first ptr)) dboxes)))))))

(defun markAndSubstNoPath (dbox)
  ;; Returns the (unpositioned) rebuilt dbox
  ;; This routine is faster and simpler than 'markAndSubst' because we
  ;; don't have to keep track of a distinguished dbox.
  (let ((box (DisplayBox-box dbox)))
    (cond ((marked? box)
           (markValue box))
          ((token? box)
           (mark box dbox))
          (t
           ; mark all of the children
           (mark box (RebuildWithoutPath
                      (Box-operator box)
                      (mapcar #'markAndSubstNoPath (Box-children box))))))
    )))
```

## Claims

1. Method of identifying common subexpressions within an expression, the method comprising the steps of:

selecting a subexpression from within a displayed portion of an expression, the expression being stored as subexpressions corresponding to groups of data on an expression tree, syntactically identical subexpressions of the expression being represented as a single unique group of data having an operator as a node of the group, the node having a predetermined unique address common to the syntactically identical subexpressions;

comparing the selected subexpression to stored subexpressions by examining the nodes of the expression tree to determine a match;

assigning, upon finding a match, at least one of an applied label and a default label to the selected subexpression; and

displaying the label in place of the selected subexpression and all syntactically identical subexpressions in the display.

2. Apparatus for identifying common subexpressions within an expression, comprising:

input means for selecting a subexpression from within a displayed portion of an expression;

memory means, including a stored program, for storing an expression as subexpressions corresponding to groups of data on an expression tree, syntactically identical subexpressions of the expression being represented as a single unique group of data having an operator as a node of the group, the node having a predetermined unique address common to the syntactically identical subexpressions;

processor means coupled to the input and memory means for comparing the selected subexpression to stored subexpressions by examining the nodes of the expression tree to determine a match and, upon finding a match, assigning at least one of an applied label and a default label to the selected subexpression; and

display means coupled to the processor means for displaying the assigned label in place of the selected expression and all syntactically identical subexpressions.

3. The apparatus of claim 2, wherein the input means is disposed for also applying a label to the processor means, specifying a name for the selected subexpression.

FIG.1

FIG.3

FIG.2

FIG.4

EP 0 345 063 A2

FIG.5A

FIG.5B

FIG.5C

FIG.6